Europäisches Patentamt

European Patent Office

Office européen des brevets

(19)

(11) **EP 1 129 438 B1**

(12) **FASCICULE DE BREVET EUROPEEN**

| | |
|---|---|
| (45) Date de publication et mention de la délivrance du brevet: **04.02.2004 Bulletin 2004/06** | (51) Int Cl.⁷: **G07F 7/10** |
| (21) Numéro de dépôt: **99954056.0** | (86) Numéro de dépôt international: **PCT/FR1999/002692** |
| (22) Date de dépôt: **04.11.1999** | (87) Numéro de publication internationale: **WO 2000/030048 (25.05.2000 Gazette 2000/21)** |

(54) **PROCEDE D'AUTHENTIFICATION ENTRE UNE CARTE A MEMOIRE ET UN TERMINAL**

VERFAHREN ZUR AUTHENTIFIKATION ZWISCHEN EINER SPEICHERKARTE UND EINEM ENDGERÄT

AUTHENTICATING METHOD BETWEEN A SMART CARD AND A TERMINAL

| | |
|---|---|
| (84) Etats contractants désignés: **AT BE CH CY DE DK ES FI FR GB GR IE IT LI LU MC NL PT SE** | (73) Titulaire: **GEMPLUS** **13881 Gémenos Cédex (FR)** |
| (30) Priorité: **12.11.1998 FR 9814224** | (72) Inventeur: **COOREMAN, Pascal** **F-13008 Marseille (FR)** |
| (43) Date de publication de la demande: **05.09.2001 Bulletin 2001/36** | (56) Documents cités: **EP-A- 0 216 298**     **EP-A- 0 423 035** **WO-A-96/24913**     **FR-A- 2 600 188** **FR-A- 2 685 520** |

**Description**

L'invention concerne les cartes à mémoire et les terminaux auxquels elles sont susceptibles d'être connectées de temps à autre et, plus particulièrement, un procédé qui permet à la carte à mémoire et au terminal de s'authentifier.

Les cartes à mémoire, du fait qu'elles ne comportent pas un microprocesseur, ne peuvent pas mettre en oeuvre un algorithme d'authentification qui implique des calculs. Cependant, certaines cartes à mémoire mettent en oeuvre un algorithme sous forme câblée qui permet l'authentification dite "active" de la carte par le terminal mais pas l'authentification inverse du terminal par la carte. Par exemple, le document EP0423035 propose une solution d'authentification sécurisée d'une carte à mémoire, basée sur la vérification et le calcul par le terminal, à chaque transaction, de certificats stockés dans la carte à mémoire.

Par suite de leur faible coût, les cartes à mémoire sont très utilisées dans de nombreuses applications telles que les cartes de fidélité, les contrôles d'accès, les paiements privatifs, etc ... . Cependant, par suite de l'absence d'authentification, leur sécurité d'emploi est vulnérable de sorte qu'on leur préfère parfois des cartes à microprocesseur pour certaines applications. Mais ces cartes à microprocesseur sont d'un coût nettement plus élevé, d'autant plus élevé que l'algorithme d'authentification est élaboré, ce qui conduit à les écarter pour des applications bon marché.

Aussi, le but de la présente invention est d'obtenir la sécurité d'emploi des cartes à mémoire.

Ce but est atteint en mettant en oeuvre un procédé d'authentification dans lequel tous les calculs algorithmiques sont effectués par le terminal auquel la carte à mémoire est connectée.

Par ailleurs, les opérations relatives à l'authentification sont effectuées avant le début d'une transaction proprement dite et après la fin de cette transaction en vue de l'authentification au début de la transaction suivante.

L'invention concerne donc un procédé d'authentification entre une carte à mémoire comportant au moins un compteur et un terminal, comprenant les étapes suivantes consistant à :

(a) Insérer la carte à m,moire dans le terminal,
(b) Calculer dans le terminal un code secret CSC1 selon une fonction cryptographique F de plusieurs variables comprenant au moins un code CSN identifiant la carte à mémoire et la valeur dudit compteur,
(c) transmettre le code secret CSC1 à la carte (CM) ,
(d) comparer dans la carte ce code secret CSC1 à un code secret CSC0 enregistré dans la carte (CM) à la fin de la précédente authentification selon l'opération (h) ci-après,
(e) autoriser la suite des opérations si la comparaison indique l'identité CSC0 = CSC1 ou en la refusant dans le cas contraire,
(f) exécuter la transaction prévue et modifier la valeur dudit compteur,
(g) calculer dans le terminal un nouveau code secret CSC2 selon la fonction cryptographique F du code CSN identifiant la carte à mémoire et de la nouvelle valeur dudit compteur,
(h) mettre à jour la carte à mémoire pour la prochaine transaction en enregistrant dans la mémoire le nouveau code secret CSC2 calculé par l'opération (g).

Avantageusement, pour obtenir l'authentification de la carte par le terminal, le procédé comprend les étapes supplémentaires suivantes entre les étapes (e) et (f) consistant à :

(x) calculer dans le terminal un certificat d'authentification CA1 selon une fonction cryptographique G de plusieurs variables comprenant au moins le code CSN identifiant la carte à mémoire et la valeur dudit compteur,
(y) authentifier la carte par le terminal lorsque le certificat d'authentification calcul, CA1 est identique à un certificat CA0 calcul, et enregistré dans la carte à la fin de la précédente transaction selon les étapes (g') et (h') ci-après

- en ce que l'étape (g) est complétée par l'étape suivante consistant à :

(g') calculer dans le terminal un nouveau certificat d'authentification CA2 selon la fonction cryptographique G,

- et en ce que l'étape (h) est complétée par l'étape suivante consistant à :

(h') mettre à jour la carte à mémoire pour la prochaine transaction en enregistrant dans la mémoire le nouveau certificat d'authentification CA2 calculé selon l'étape (g'). L'invention porte aussi sur un terminal et une carte à mémoire aptes à mettre en oeuvre le procédé d'authentification décrit ci-dessus.

D'autres caractéristiques et avantages de la présente invention apparaîtront à la lecture de la description suivante d'un exemple particulier de réalisation, ladite description étant faite en relation avec le dessin joint dans lequel :

- la figure 1 est un schéma simplifié d'une carte à mémoire, et

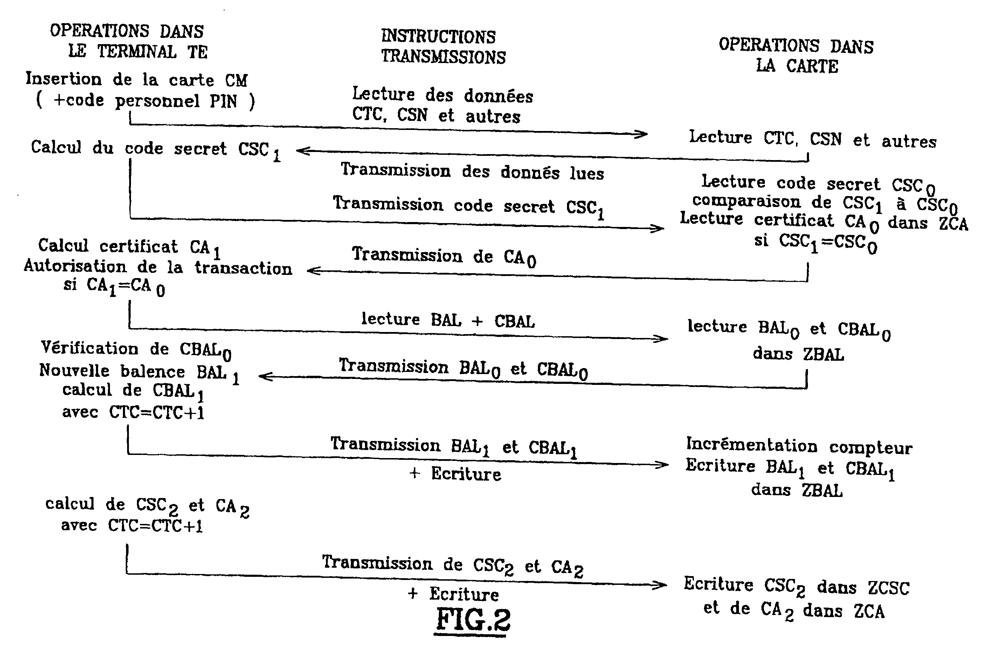

- la figure 2 est un diagramme montrant les opérations effectuées entre le terminal et la carte à mémoire lors d'une transaction.

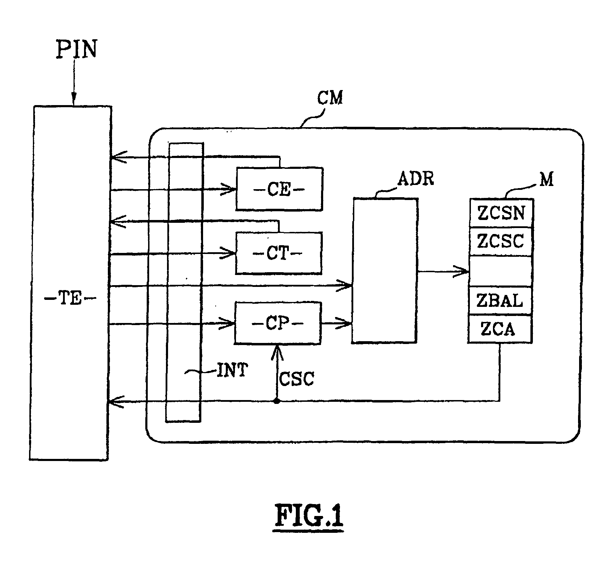

Le procédé de l'invention s'applique (figure 1) à une carte à mémoire CM qui comprend bien entendu une mémoire M mais aussi un compteur CT dit de transactions qui compte les transactions effectuées entre la carte CM et un terminal TE auquel la carte est connectée par insertion.

La carte à mémoire CM peut aussi comprendre un deuxième compteur CE dit d'authentification qui compte les demandes d'authentification, ces demandes d'authentification pouvant intervenir à tout moment lors d'une transaction et indépendamment de cette dernière.

Ces deux compteurs CE et CT peuvent faire partie de la mémoire M selon des dispositifs connus.

En outre, la mémoire M de la carte comprend une première zone à accès non protégé en lecture dans laquelle est enregistré, par exemple le numéro de série CSN de la carte dans une partie ZCSN, et une deuxième zone à accès protégé pour le reste de la mémoire, cette deuxième zone comportant des parties qui sont affectées à l'enregistrement de valeurs particulières telles qu'un Certificat d'Authentification CA dans la partie ZCA et une balance BAL et son certificat d'authentification CBAL dans la partie ZBAL.

Une troisième zone ZCSC est réservée à l'enregistrement d'un code secret CSC et son accès pour enregistrement est soumis à la présentation du code secret CSC.

La mémoire M est adressée par un circuit d'adressage ADR et la transmission bilatérale des signaux entre le terminal TE et la carte CM s'effectue par l'intermédiaire d'un circuit interface INT.

Par ailleurs, la carte comprend un comparateur CP qui compare le code CSC lu dans la partie ZCSC à un code fourni par le terminal TE, le résultat de la comparaison permettant ou non l'adressage de la zone protégée de la mémoire M.

Le procédé selon l'invention sera décrit dans le cadre d'une authentification mutuelle entre la carte et le terminal en mettant en oeuvre le seul compteur de transactions CT et des fonctions cryptographiques dites à sens unique mais le procédé de l'invention peut également s'appliquer à la seule authentification du terminal par la carte, à la mise en oeuvre simultanée des deux compteurs CE et CT et de fonctions cryptographiques autres que celles à sens unique. Les différentes opérations, notamment cryptographiques, peuvent être réalisées soit dans le terminal TE, soit dans un module de sécurité, soit encore dans un dispositif distant.

De préférence, le procédé d'authentification mutuelle selon l'invention comprend les étapes suivantes consistant à :

**(m)** insérer la carte CM dans le terminal TE, cette étape pouvant comporter la présentation d'un code personnel PIN de l'utilisateur de la carte,

**(n)** Calculer dans le terminal TE une clé de session $Ks_1$ en :

(n$_1$) lisant le numéro de série CSN de la carte CM,

(n$_2$) lisant le contenu $CTC_1$ du compteur de transactions CT de la carte CM et,

(n$_3$) calculant une clé de session $Ks_1$ selon une fonction cryptographique à sens unique $F_{ks}$ telle que :

$$Ks_1 = F_{ks}(K_m, CSN, CTC_1)$$

- $K_m$ étant une clé-mère enregistrée dans le terminal TE,
- $F_{ks}$ étant par exemple une fonction du type hachage,

**(o)** Calculer, dans le terminal TE, un code secret $CSC_1$ de la carte à l'aide d'une fonction cryptographique F telle que :

$$CSC_1 = F(Ks_1),$$

**(p)** Authentifier le terminal TE par la carte CM en :

(p$_1$) transmettant le code secret $CSC_1$ à la carte CM,

(p$_2$) comparant dans le comparateur CP ce code secret $CSC_1$ à un code secret $CSC_0$ enregistré dans la carte CM à la fin de la précédente transaction avec la carte, et

(p$_3$) autorisant la suite des opérations si la comparaison indique l'identité $CSC_0 = CSC_1$ ou en la refusant dans le cas contraire ;

**(q)** Calculer dans le terminal TE un Certificat d'Authentification $CA_1$ tel que :

$$CA_1 = G(Ks_1)$$

- G étant une fonction cryptographique, et

**(r)** Authentifier la carte CM par le terminal TE en :

(r$_1$) lisant le contenu $CA_0$ de la zone ZCA de la mémoire de la carte CM,

(r$_2$) transmettant au terminal TE le contenu $CA_0$ de cette zone protégée ZCA qui correspond à un Certificat d'Authentification $CA_0$ calculé à la fin de la précédente transaction,

(r$_3$) comparant dans le terminal TE le Certificat d'Authentification calculé $CA_1$ au certificat $CA_0$, et

(r$_4$) autorisant la suite des opérations si la comparaison indique l'identité $CA_1 = CA_0$ ;

**(s)** Exécuter la transaction, cette transaction pouvant consister par exemple à mettre à jour une zone de mémoire ZBAL indiquant l'état du crédit ou balance BAL restant dans la carte CM en :

($s_1$) lisant dans la zone ZBAL la valeur $BAL_0$ de la balance résultant de la transaction précédente et le certificat correspondant $CBAL_0$,

($s_2$) vérifiant que le certificat $CBAL_0$ correspond bien au résultat de la fonction cryptographique telle que :

$$CBAL_0 = H (K_t, BAL_0, CSN, CTC_1),$$

-   $K_t$ étant une clé de transaction,

($s_3$) incrémentant le compteur de transactions à la valeur $(CTC_1 + 1) = CTC_2$

($s_4$) enregistrant la nouvelle balance $BAL_1$ dans la zone ZBAL,

($s_5$) calculant un Certificat $CBAL_1$ de la nouvelle balance $BAL_1$ telle que :

$$CBAL_1 = H(K_t, BAL_1, CSN, CTC_2), \text{ et}$$

($s_6$) enregistrant $CBAL_1$ dans la zone ZBAL ;

**(t)** Mettre à jour la carte CM pour la prochaine transaction avec un nouveau code secret $CSC_2$ et un nouveau certificat $CA_2$, en

($t_1$) calculant dans le terminal TE :

-   la future clé de session $Ks_2$ telle que :

$$Ks_2 = F(K_m, CSN, CTC_2)$$

-   le futur code secret $CSC_2$ tel que :

$$CSC_2 = F(Ks_2),$$

-   le futur certificat d'authentification $CA_2$ tel que :

$$CA_2 = G(Ks_2),$$

($t_2$) enregistrant le code secret $CSC_2$ dans la mémoire M de la carte CM dans la zone protégée et le certificat d'authentification $CA_2$ dans la zone protégée ZCA.

L'invention a été décrite avec un exemple particulier de réalisation dans lequel la transaction est une opération sur la valeur balance de la carte ; cependant, l'invention s'applique à toute autre transaction selon les applications prévues pour la carte considérée.

Dans cet exemple particulier, la transaction se termine par une incrémentation du compteur de transactions CT à une valeur $CTC_2$ qui est égale habituellement à $(CTC_1 + 1)$. Cependant, cette valeur de $CTC_2$ peut être différente de $(CTC_1 + 1)$ et être égale, par exemple, à $(CTC_1 + 3)$.

Ce compteur de transactions doit être incrémenté ou décrémenté à chaque transaction même si l'opération conduit à ne pas changer la balance ; dans ce cas, il faut effectuer la transaction en réenregistrant la balance inchangée mais le certificat $CBAL_1$ sera différent car le compteur de transactions aura été incrémenté. Il en sera de même du nouveau code secret $CSC_2$ et du certificat $CA_2$.

Les variables des fonctions F, G et $F_{ks}$ qui ont été retenues dans l'exemple sont la clé-mère, le numéro de série CSN et la valeur CTC du compteur de transactions.

Cependant, des variables additionnelles peuvent être utilisées telles que le code personnel PIN de l'utilisateur de la carte, ce code étant entré dans le terminal après insertion de la carte.

L'invention a été décrite dans le cadre d'une authentification mutuelle carte/terminal mais elle s'applique de manière plus générale d'abord à une authentification du terminal par la carte, cette première authentification pouvant être suivie ou non par une authentification de la carte par le terminal, l'ensemble des deux authentifications réalisant une authentification mutuelle.

L'exemple décrit utilise des fonctions cryptographiques F, G et $F_{ks}$ utilisant des variables telles qu'une clé-mère $K_m$, une clé de session $K_s$ et une clé de transaction $K_t$, mais de telles clés ne sont pas nécessaires pour mettre en oeuvre l'invention.

La valeur du compteur d'authentifications CE est de préférence utilisée pour le calcul du code secret CSN tandis que la valeur du compteur de transactions CT est de préférence utilisée pour le calcul du certificat d'authentification CA.

## Revendications

1.  Procédé d'authentification entre une carte à mémoire (CM) comportant au moins un compteur (CE, CT) et un terminal (TE), comprenant les étapes suivantes consistant à

    (a) Insérer la carte à mémoire (CM) dans le terminal (TE),
    (b) Calculer dans le terminal un code secret CSC1 selon une fonction cryptographique F de plusieurs variables comprenant au moins un code CSN identifiant la carte à mémoire et la valeur (CTE1, CTC1) dudit compteur (CE, CT),

(c) transmettre le code secret CSC1 à la carte (CM),

(d) comparer dans la carte ce code secret CSC1 à un code secret CSC0 enregistré dans la carte (CM) à la fin de la précédente authentification selon l'opération (h) ci-après,

(e) autoriser la suite des opérations si la comparaison indique l'identité CSC0 = CSC1 ou en la refusant dans le cas contraire,

(f) exécuter la transaction prévue et modifier la valeur (CTE2, CTC2) dudit compteur (CE, CT),

(g) calculer dans le terminal (TE) un nouveau code secret CSC2 selon la fonction cryptographique F du code CSN identifiant la carte à mémoire (CM) et de la nouvelle valeur (CTE2, CTC2) dudit compteur (CE, CT),

(h) mettre à jour la carte à mémoire (CM) pour la prochaine transaction en enregistrant dans la mémoire (M), le nouveau code secret CSC2 calculé par l'opération (g).

2. Procédé selon la revendication 1, **caractérisé :**

- **en ce qu'**il comprend les étapes supplémentaires suivantes entre les étapes (e) et (f) consistant à :

   (x) calculer dans le terminal (TE) un certificat d'authentification CA1 selon une fonction cryptographique G de plusieurs variables comprenant au moins le code CSN identifiant la carte à mémoire et la valeur (CTE1, CTC1) du compteur (CE, CT),
   (y) authentifier la carte (CM) par le terminal (TE) lorsque le certificat d'authentification calculé CA1 est identique à un certificat CA0 calculé et enregistré à la fin de la précédente transaction selon les étapes (g') et (h') ci-après :

- **en ce que** l'étape (g) est complétée par l'étape suivante consistant à :

   (g') calculer dans le terminal (TE) un nouveau certificat d'authentification CA2 selon la fonction cryptographique G du code CSN identifiant la carte à mémoire et de la nouvelle valeur (CTE2, CTC2) dudit compteur (CE, CT),

- et **en ce que** l'étape (h) est complétée par l'étape suivante consistant à :

   (h') mettre à jour la carte à mémoire (CM) pour la prochaine transaction en enregistrant dans la mémoire (M) le nouveau certificat d'authentification CA2 calculé selon l'étape (g').

3. Procédé selon la revendication 1, **caractérisé :**

- **en ce que** l'étape (b) consiste à :

   - calculer d'abord dans le terminal (TE) une clé de session Ks1 selon une fonction cryptographique Fks de plusieurs variables comprenant au moins une clé-mère Km connue du terminal (TE), le code CSN identifiant la carte à mémoire (CM) et la valeur (CTE1, CTC1) dudit compteur (CE, CT),
   - calculer ensuite dans le terminal (TE) le code secret CSC1 selon la fonction cryptographique F de la clé de session Ks1,

- **en ce que** l'étape (g) consiste à :

   - calculer d'abord dans le terminal (TE) une nouvelle clé de session Ks2 selon la fonction cryptographique Fks avec la nouvelle valeur (CTE2, CTC2) dudit compteur (CE, CT) ,
   - calculer ensuite dans le terminal (TE) le nouveau code secret CSC2 selon la fonction cryptographique F de la nouvelle clé de session Ks2.

4. Procédé selon les revendications 2 et 3, **caractérisé en ce que** :

- l'étape (g') consiste à calculer le nouveau certificat d'authentification CA2 selon la fonction cryptographique G de la nouvelle clé de session Ks2.

5. Procédé selon l'une quelconque des revendications précédentes 1 à 4, dans son application à une carte à mémoire (CM) comprenant deux compteurs, l'un (CE) comptant les authentifications et l'autre (CT) comptant les transactions de paiement, **caractérisé en ce que** les variables des fonctions cryptographiques F, G et Fks comprennent les valeurs (CTE1, CTE2, CTC1, CTC2) desdits compteurs.

6. Procédé selon l'une des revendications précédentes **caractérisé en ce que** les fonctions cryptographiques F, G et Fks sont des fonctions à sens unique.

7. Procédé selon la revendication 6, **caractérisé en ce que** les fonctions cryptographiques F, G et Fks sont des fonctions de "hachage".

8. Procédé selon l'une des revendications précédentes 3 à 7, **caractérisé en ce que** l'étape (b) comprend les étapes suivantes consistant à :

(b1) lire le numéro de série CSN de la carte (CM),

(b2) lire le contenu (CTE1 et/ou CTC1) du compteur, et

(b3) calculer la clé de session selon une fonction cryptographique Fks telle que :

$$Ks1 = Fks(Km, CSN, CTC1).$$

9. Procédé selon l'une des revendications 2 à 8, **caractérisé en ce que** l'étape (y) comprend les étapes suivantes consistant à :

(y1) lire le contenu CA0 de la zone ZCA de la mémoire de la carte (CM),

(y2) transmettre au terminal (TE) le contenu CA0 de cette zone ZCA qui correspond à un Certificat d'Authentification CA0 calculé à la fin de la précédente transaction,

(y3) comparer dans le terminal (TE) le Certificat d'Authentification calculé CA1 au certificat CA0, et

(y4) autoriser la suite des opérations si la comparaison indique l'identité CA1 = CA0.

10. Procédé selon l'une des revendications 1 à 9, **caractérisé en ce que** l'étape (f) comprend, dans le cas d'une modification de la balance BAL0, les étapes suivantes consistant à :

(f1) lire dans une zone ZBAL de la mémoire (M) la valeur BAL0 de la balance résultant de la transaction précédente et le certificat correspondant CBAL0, et

(f2) vérifier que le certificat CBAL0 correspond bien au résultat de la fonction cryptographique telle que :

$$CBAL0 = H (Kt, BAL0, CSN, CTC1),$$

- Kt ,tant une clé de transaction,

(f3) incrémenter le compteur de transactions à la valeur (CTC1 + 1) = CTC2

(f4) enregistrer la nouvelle balance BAL1 dans la zone ZBAL,

(f5) calculer un Certificat CBAL1 de la nouvelle balance BAL1 telle que :

$$CBAL1 = H(Kt, BAL1, CSN, CTC2), et$$

(f6) enregistrer CBAL1 dans la zone ZBAL.

11. Procédé selon l'une des revendications précédentes 1 à 10, **caractérisé en ce qu'**il comprend en outre une étape d'entrée du code personnel PIN de l'utilisateur.

12. Procédé selon l'une des revendications précédentes 3 à 11, **caractérisé en ce que** :

- dans l'étape (b), l'une des variables utilisées pour le calcul de session Ks1 est le code personnel PIN de l'utilisateur.

13. Carte à mémoire comportant une mémoire (M) comprenant au moins un compteur (CE,CT) et un code secret CSC0, comprenant un comparateur pour comparer un code secret CSC1 fourni par un terminal (TE) avec le code secret CSC0 afin d'autoriser une transaction si la comparaison indique CSC0 = CSC1, et des moyens pour mettre à jour le code secret CSC0 en enregistrant un nouveau code secret CSC2 calculé par le terminal après l'exécution de la transaction.

14. , Terminal de carte à mémoire comprenant un moyen pour calculer un code secret CSC1 selon une fonction cryptographique F de plusieurs variables comprenant au moins un code CSN identifiant une carte à mémoire (CM) et la valeur (CTE1, CTC1) d'un compteur (CE, CT) de la carte à mémoire (CM) transmis par la carte (CM) et comprenant un moyen pour transmettre le code secret CSC1 à la carte (CM), et des moyens pour mettre en oeuvre les deux moyens d'une part après l'insertion de la carte à mémoire (CM) et d'autre part après l'exécution d'une transaction afin d'être authentifié par la carte.

## Patentansprüche

1. Authentifizierungsverfahren zwischen einer Speicherkarte (CM) mit wenigstens einem Zähler (CE, CT) und einem Terminal (TE), umfassend die folgenden Stufen, bestehend aus:

(a) Einführen der Speicherkarte (CM) in das Terminal (TE),

(b) Berechnen eines Geheimcodes CSC1 im Terminal gemäß einer kryptographischen Funktion F mit mehreren Variablen mit wenigstens einem die Speicherkarte und den Wert (CTE1, CTC1) des genannten Zählers (CE, CT) identifizierenden Codes CSN,

(c) Übertragen des Geheimcodes CSC1 auf die Karte (CM),

(d) Vergleichen dieses Geheimcodes CSC1 in der Karte mit einem in der Karte(CM) beim Abschluss der vorherigen Authentifizierung registrierten Geheimcode CSC0 gemäß der nachstehenden Operation (h),

(e) Zulassung des folgenden Ablaufs der Operation, wenn der Vergleich die Identität CSC0 = CSC1 angibt oder andernfalls Verweigerung des Ablaufs

(f) Ausführung der vorgesehenen Transaktion und Änderung des Wertes (CTE2, CTC2) des genannten Zählers (CE, CT),

(g) Berechnung eines neuen Geheimcodes CSC2 im Terminal (TE) gemäß der kryptographischen Funktion F des die Speicherkarte (CM) und den neuen Wert (CTE2, CTC2) des genannten Zählers (CE, CT) identifizierenden Codes CSN,

(h) Aktualisierung der Speicherkarte (CM) für die nächste Transaktion durch Registrieren des neuen, durch die Operation (g) berechneten Geheimcodes CSC2 im Speicher (M) .

2. Verfahren gemäß Anspruch 1, **dadurch gekennzeichnet, dass**:

   - es die zusätzlichen nachfolgenden Stufen zwischen den Stufen (e) und (f) umfasst, bestehend aus:

      (x) Berechnen eines Authentifizierungszertifikats CA1 im Terminal (TE) gemäß einer kryptographischen Funktion G mit mehreren Variablen, umfassend wenigstens den die Speicherkarte und den Wert (CTE1, CTC1) des Zählers (CE, CT) identifizierenden Codes CSN,

      (y) Authentifizierung der Karte (CM) durch das Terminal (TE), wenn das berechnete Authentifizierungszertifikat CA1 mit einem beim Abschluss der vorherigen Transaktion gemäß den nachstehenden Stufen (g') und (h') berechneten und registrierten Zertifikat CA0 identisch ist:

   - dass die Stufe (g) durch die nachfolgende Stufe vervollständigt wird, bestehend aus:

      (g') Berechnen eines neuen Authentifizierungszertifikats CA2 im Terminal (TE) gemäß der kryptographischen Funktion G des die Speicherkarte und den neuen Wert (CTE2, CTC2) des genannten Zählers (CE, CT) identifizierenden Codes CSN

   - und dass die Stufe (h) durch die nachfolgende Stufe vervollständigt wird, bestehend aus:

      (h') Aktualisieren der Speicherkarte (CM) für die nächste Transaktion durch Registrieren des neuen, gemäß der Stufe (g') berechneten Zertifizierungszertifikats CA2 im Speicher (M).

3. Verfahren gemäß Anspruch 1, **dadurch gekennzeichnet:**

   - **dass** die Stufe (b) in Folgendem besteht:

      - Zunächst im Terminal (TE) einen Sitzungsschlüssel Ks1 gemäß einer kryptographischen Funktion Fks mit mehreren Variablen berechnen, umfassend wenigstens einen dem Terminal (TE) bekannten Mutterschlüssel K, wobei der Code CSN die Speicherkarte (CM) und den Wert (CTE1, CTC1) des genannten Zählers (CE, CT) identifiziert,

      - Anschließend im Terminal (TE) den Geheimcode CSC1 gemäß der kryptographischen Funktion F des Sitzungsschlüssels Ks1 berechnen,

   - **dass** die Stufe (g) in Folgendem besteht:

      - Zunächst im Terminal (TE) einen neuen Sitzungsschlüssel Ks2 gemäß der kryptographischen Funktion Fks mit dem neuen Wert (CTE2, CTC2) des genannten Zählers (CE, CT) berechnen,

      - Anschließend im Terminal (TE) den neuen Geheimcode CS2 gemäß der kryptographischen Funktion F des neuen Sitzungsschlüssels Ks2 berechnen.

4. Verfahren gemäß Anspruch 2 und 3, **dadurch gekennzeichnet, dass**:

   - die Stufe (g') in der Berechnung des neuen Authentifizierungszertifikats CA2 gemäß der kryptographischen Funktion G des neuen Sitzungsschlüssels Ks2 besteht.

5. Verfahren gemäß einem der vorherigen Ansprüche 1 bis 4 in seiner Anwendung auf eine Speicherkarte (CM) mit zwei Zählern, wobei einer (CE) die Authentifizierungen und der andere (CT) die Zahlungstransaktionen umfasst, **dadurch gekennzeichnet, dass** die Variablen der kryptographischen Funktionen F, G und Fks die Werte (CTE1, CTE2, CTC1, CTC2) der genannten Zähler umfassen.

6. Verfahren gemäß einem der vorherigen Ansprüche, **dadurch gekennzeichnet, dass** die kryptographischen Funktionen F, G und Fks Funktionen in einer Richtung sind.

7. Verfahren gemäß Anspruch 6, **dadurch gekennzeichnet dass** die kryptographischen Funktionen F, G und Fks "Zerhacker"-Funktionen sind.

**8.** Verfahren gemäß einem der vorherigen Ansprüche 3 bis 7, **dadurch gekennzeichnet, dass** die Stufe (b) die folgenden Stufen umfasst, bestehend aus:

(b1) Lesen der Seriennummer CSN der Karte (CM),
(b2) Lesen des Inhaltes (CTE1 und / oder CTC1) des Zählers und
(b3) Berechnen des Sitzungsschlüssels gemäß einer kryptographischen Funktion Fks, wie zum Beispiel:

$$Ks1 = Fks (Km, CSN, CTC1).$$

**9.** Verfahren gemäß Anspruch 2 bis 8, **dadurch gekennzeichnet, dass** die Stufe (y) die nachfolgenden Stufen umfasst, bestehend aus:

(y1) Lesen des Inhalts CA0 des Bereichs ZCA des Speichers der Karte (CM),
(y2) Übermittlung des Inhalts CA0 dieses Bereichs ZCA, der einem bei Abschluss der vorherigen Transaktion berechneten Authentifizierungszertifikat CA0 entspricht, an das Terminal (TE),
(y3) Vergleichen des berechneten Authentifizierungszertifikats CA1 mit dem Zertifikat CA0 im Terminal (TE), und
(y4) Zulassung der Folge der Operationen, wenn der Vergleich die Identität CA1 = CA0 angibt.

**10.** Verfahren gemäß Anspruch 1 bis 9, **dadurch gekennzeichnet, dass** die Stufe (f) im Falle einer Modifikation des Saldos BAL0 die folgenden Stufen umfasst, bestehend aus:

(f1) Lesen des Wertes BAL0 des aus der vorherigen Transaktion resultierenden Saldos und des entsprechenden Zertifikats CBAL0 in Bereich ZBAL des Speichers (M), und
(f2) Überprüfen, dass das Zertifikat CABAL0 effektiv dem Ergebnis der kryptographischen Funktion entspricht, wie zum Beispiel:

$$CBAL0 = H (Kt, BAL0, CSN, CTC1),$$

- Kt, als ein Transaktionsschlüssel,

(f3) Inkrementieren des Transaktionszählers auf den Wert (CTC1 + 1) = CTC2
(f4) Registrieren des neuen Saldos BAL1 im Bereich ZBAL,
(f5) Berechnen eines Zertifikats CBAL1 des neuen Saldos BAL1, wie zum Beispiel:

$$CBAL1 = H (Kt, BAL1, CSN, CTC2) \text{ und}$$

(f6) Registrieren von CBAL1 im Bereich ZBAL.

**11.** Verfahren gemäß einem der vorherigen Ansprüche 1 bis 10, **dadurch gekennzeichnet, dass** es darüber hinaus eine Eingabestufe des persönlichen PIN-Codes des Anwenders umfasst.

**12.** Verfahren gemäß einem der vorherigen Ansprüche 3 bis 11, **dadurch gekennzeichnet, dass**:

- in der Stufe (b) eine der für die Sitzungsberechnung Ks1 verwendete Variable der persönliche PIN-Code des Anwenders ist.

**13.** Speicherkarte mit einem Speicher (M) mit wenigstens einem Zähler (CE, CT) und einem Geheimcode CSC0, umfassend einen Komparator zum Vergleichen eines durch ein Terminal (TE) gelieferten Geheimcodes CSC1 mit dem Geheimcode CSC0, um eine Transaktion zuzulassen, wenn der Vergleich CSC0 = CSC1 angibt, und Mittel zum Aktualisieren des Geheimcodes CSC0 durch Registrieren eines neuen, durch das Terminal nach der Ausführung der Transaktion berechneten Geheimcodes CSC2.

**14.** Speicherkartenterminal mit einem Mittel zum Berechnen eines Geheimcodes CSC1 gemäß einer kryptographischen Funktion F mit mehreren Variablen, umfassend wenigstens einen eine Speicherkarte (CM) und den durch die Karte übertragenen Wert (CTE1, CTC1) eines Zählers (CE, CT) der Speicherkarte (CM) identifizierenden Code CSN und mit einem Mittel zum Übertragen des Geheimcodes CSC1 auf die Karte (CM) und mit Mitteln zum Umsetzen der beiden Mittel einerseits nach dem Einführen der Speicherkarte (CM) und andererseits nach der Ausführung einer Transaktion zwecks Authentifizierung durch die Karte.

## Claims

**1.** A method of authentication between a memory card (CM) having at least one counter (CE, CT) and a terminal (TE), comprising the following steps consisting in:

(a) inserting the memory card (CM) into the terminal (TE);
(b) calculating in the terminal a secret code CSC1 according to a cryptographic function F of a number of variables comprising at least one code CSN identifying the memory card and the value (CTE1, CTC1) of the said counter (CE,

**EP 1 129 438 B1**

CT);
(c) transmitting the secret code CSC1 to the card (CM);
(d) comparing in the card this secret code CSC1 with a secret code CSC0 recorded in the card (CM) at the end of the previous authentication according to the operation (h) below;
(e) authorising the remainder of the operations if the comparison indicates the identity CSC0 = CSC1 or not allowing it in the contrary case;
(f) carrying out the transaction provided for and modifying the value (CTE2, CTC2) of the said counter (CE, CT);
(g) calculating in the terminal (TE) a new secret code CSC2 according to the cryptographic function F of the code CSN identifying the memory card (CM) and the new value (CTE2, CTC2) of the said counter (CE, CT);
(h) updating the memory card (CM) for the next transaction by recording in the memory (M) the new secret code CSC2 calculated by the operation (g).

2. A method according to Claim 1, **characterised:**

   - **in that** it comprises the following additional steps between the steps (e) and (f) consisting in:

      (x) calculating in the terminal (TE) an authentication certificate CA1 according to a cryptographic function G of a number of variables comprising at least the code CSN identifying the memory card and the value (CTE1, CTC1) of the counter (CE, CT);
      (y) authenticating the card (CM) by the terminal (TE) when the calculated authentication certificate CA1 is identical to a certificate CA0 calculated and recorded at the end of the previous transaction according to the steps (g') and (h') below:

   - **in that** the step (g) is supplemented by the following step consisting in:

      (g') calculating in the terminal (TE) a new authentication certificate CA2 according to the cryptographic function G of the code CSN identifying the memory card and the new value (CTE2, CTC2) of the said counter (CE, CT);

   - and **in that** the step (h) is supplemented by the following step consisting in:

      (h') updating the memory card (CM) for the next transaction by recording in the memory (M) the new authentication certificate CA2 calculated according to the step (g').

3. A method according to Claim 1, **characterised:**

   - **in that** the step (b) consists in:

      - first calculating in the terminal (TE) a session key Ks1 according to a cryptographic function Fks of a number of variables comprising at least one parent key Km known to the terminal (TE), the code CSN identifying the memory card (CM) and the value (CTE1, CTC1) of the said counter (CE, CT);
      - next calculating in the terminal (TE) the secret code CSC1 according to the cryptographic function F of the session key Ks1;

   - **in that** the step (g) consists in:

      - first calculating in the terminal (TE) a new session key Ks2 according to the cryptographic function Fks with the new value (CTE2, CTC2) of the said counter (CE, CT);
      - next calculating in the terminal (TE) the new secret code CSC2 according to the cryptographic function F of the new session key Ks2.

4. A method according to Claims 2 and 3, **characterised in that**:

   - the step (g') consists in calculating the new authentication certificate CA2 according to the cryptographic function G of the new session key Ks2;

5. A method according to any one of the preceding Claims 1 to 4, in its application to a memory card (CM) comprising two counters, one (CE) counting the authentications and the other (CT) counting the payment transactions, **characterised in that** the variables of the cryptographic functions F, G and Fks comprise the values (CTE1, CTE2, CTC1, CTC2) of the said counters.

6. A method according to one of the preceding claims, **characterised in that** the cryptographic functions F, G and Fks are one-way functions.

7. A method according to Claim 6, **characterised in that** the cryptographic functions F, G and Fks are "hash" functions.

8. A method according to one of the preceding Claims 3 to 7, **characterised in that** the step (b) comprises the following steps consisting in:

(b1) reading the serial number CSN of the card (CM);

(b2) reading the content (CTE1 and/or CTC1) of the counter; and

(b3) calculating the session key according to a cryptographic function Fks such that:

$$Ks1 = Fks(Km, CSN, CTC1).$$

9.  A method according to one of Claims 2 to 8, **characterised in that** the step (y) comprises the following steps consisting in:

(y1) reading the content CA0 of the area ZCA of the memory of the card (CM);

(y2) transmitting to the terminal (TE) the content CA0 of this area ZCA which corresponds to an Authentication Certificate CA0 calculated at the end of the previous transaction;

(y3) comparing in the terminal (TE) the calculated Authentication Certificate CA1 with the certificate CA0; and

(y4) authorising the remainder of the operations if the comparison indicates the identity CA1 = CAO.

10. A method according to one of Claims 1 to 9, **characterised in that** the step (f) comprises, in the case of a modification of the balance BAL0, the following steps consisting in:

(f1) reading from an area ZBAL of the memory (M) the value BAL0 of the balance resulting from the previous transaction and the corresponding certificate CBAL0; and

(f2) verifying that the certificate CBAL0 correctly corresponds to the result of the cryptographic function such that:

$$CBAL0 = H(Kt, BAL0, CSN, CTC1)$$

-   Kt being a transaction key;

(f3) incrementing the transaction counter to the value (CTC1 + 1) = CTC2;

(f4) recording the new balance BAL1 in the area ZBAL;

(f5) calculating a Certificate CBAL1 for the new balance BAL1 such that:

$$CBAL1 = H(Kt, BAL1, CSN, CTC2); and$$

(f6) recording CBAL1 in the area ZBAL.

11. A method according to one of the preceding Claims 1 to 10, **characterised in that** it also comprises a step of entering the personal code PIN of the user.

12. A method according to one of the preceding Claims 3 to 11, **characterised in that**:

-   in the step (b), one of the variables used for the session calculation Ks1 is the personal code PIN of the user.

13. A memory card having a memory (M) comprising at least one counter (CE, CT) and a secret code CSC0, comprising a comparator for comparing a secret code CSC1 supplied by a terminal (TE) with the secret code CSC0 in order to authorise a transaction if the comparison indicates CSC0 = CSC1, and means for updating the secret code CSC0 by recording a new secret code CSC2 calculated by the terminal after the transaction has been carried out.

14. A memory card terminal comprising a means for calculating a secret code CSC1 according to a cryptographic function F of a number of variables comprising at least one code CSN identifying a memory card (CM) and the value (CTE1, CTC1) of a counter (CE, CT) on the memory card (CM) transmitted by the card (CM) and comprising a means for transmitting the secret code CSC1 to the card (CM), and means for using the two means on the one hand after the insertion of the memory card (CM) and on the other hand after a transaction has been carried out, in order to be authenticated by the card.

**FIG.1**

EP 1 129 438 B1

OPERATIONS DANS
LE TERMINAL TE

INSTRUCTIONS
TRANSMISSIONS

OPERATIONS DANS
LA CARTE

Insertion de la carte CM
( +code personnel PIN )

Lecture des données
CTC, CSN et autres

Calcul du code secret $CSC_1$

Lecture CTC, CSN et autres

Transmission des donnés lues

Lecture code secret $CSC_0$
comparaison de $CSC_1$ à $CSC_0$

Transmission code secret $CSC_1$

Lecture certificat $CA_0$ dans ZCA
si $CSC_1 = CSC_0$

Calcul certificat $CA_1$
Autorisation de la transaction
si $CA_1 = CA_0$

Transmission de $CA_0$

lecture BAL + CBAL

lecture $BAL_0$ et $CBAL_0$
dans ZBAL

Vérification de $CBAL_0$
Nouvelle balence $BAL_1$
calcul de $CBAL_1$
avec CTC=CTC+1

Transmission $BAL_0$ et $CBAL_0$

Transmission $BAL_1$ et $CBAL_1$
+ Ecriture

Incrémentation compteur
Ecriture $BAL_1$ et $CBAL_1$
dans ZBAL

calcul de $CSC_2$ et $CA_2$
avec CTC=CTC+1

Transmission de $CSC_2$ et $CA_2$
+ Ecriture

Ecriture $CSC_2$ dans ZCSC
et de $CA_2$ dans ZCA

## FIG.2